# EUROPÄISCHE PATENTANMELDUNG

(11) **EP 1 026 179 A1**
(43) Veröffentlichungstag der Anmeldung: **09.08.2000**
(21) Anmeldenummer: 00101931.4
(22) Anmeldetag: 01.02.2000
(51) Int. Cl.: C08F 10/00, C08F 4/602, C08F 4/70

(54) **Verfahren zur Herstellung von Polyolefinen mit breiter Molekulargewichtsverteilung**

(30) Priorität: 01.02.1999 DE 19903783
(71) Anmelder: Elenac GmbH, 77694 Kehl (DE)
(72) Erfinder: Gonioukh, Andrei Dr., 67373 Dudenhofen (DE); Klimesch, Roger Dr., 64665 Alsbach-Hähnlein (DE); Rau, Alexander Dr., 64289 Darmstadt (DE); Luft, Gerhard, Prof. Dr., 64367 Mühltal (DE); Schmitz, Stefan, 64289 Darmstadt (DE); Dyroff, Antje, 63512 Hainburg (DE); Wieczorek, Thomas, 67227 Frankenthal (DE)
(74) Vertreter: Meyer, Thomas

(57) **Zusammenfassung**

Verfahren zur Herstellung von Polyolefinen bei Drücken von 500 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann. Bei dem Verfahren wird die Reaktionstemperatur so einstellt, daß das resultierende Polyolefin eine durch Gelpermeationschromatographie gemessene bi- oder multimodale Molekulargewichtsverteilung oder eine Molekulargewichtsverteilung M_{w}/M_{N} von ≥ 5,0 aufweist.

## Beschreibung

Gegenstand der vorliegenden Erfindung ist ein Verfahren zur Herstellung von Polyolefinen bei Drücken von 500 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann.

Katalysatorsysteme mit einem einheitlich definierten aktiven Zentrum, sogenannte Single-site-Katalysatoren, gewinnen bei der Polymerisation von Olefinen immer mehr an Bedeutung. Diese Katalysatorsysteme führen zu Polymerisaten mit engen Molekulargewichtsverteilungen, was in besonders günstigen mechanischen Eigenschaften resultiert. Durch die enge Molekulargewichtsverteilung lassen sich derartig hergestellte Polymere jedoch oft schwer verarbeiten. Die Polymerisate lassen sich oft nur unter Absenkung der Produktivität der Verarbeitungsanlagen verarbeiten und führen häufig zu Produktionsverlusten, z.B. bei der Folienerzeugung.

Um die Verarbeitung solcher Polymere zu verbessern, wird immer öfter versucht, Polymermischungen, sogenannte Blends, herzustellen. Solche Blends lassen sich weitaus besser verarbeiten und besitzen meist noch in befriedigendem Ausmaß die vorteilhaften mechanischen Eigenschaften der single-site-katalysierten Polymere.

Derartige Polymermischung oder, allgemeiner ausgedrückt, Polymerisate mit verbreiterter oder bimodaler Molekulargewichtsverteilung, lassen sich auf verschiedene Weise erhalten. So können natürlich zwei oder mehrere Polymergranulate oder Polymergriese miteinander z.B. in einem Extruder homogen vermischt werden. Der Nachteil dieser Methode besteht in zusätzlichen Verarbeitungskosten durch den zusätzlichen Verarbeitungsschritt.

Eine weitere Möglichkeit zur Herstellung solcher Polymerisate ist der Einsatz einer Reaktorkaskade, wobei zwei Reaktoren mit unterschiedlichen Reaktionsbedingungen hintereinander gekoppelt werden. Der Nachteil solcher Kaskadenverfahren liegt vor allem in dem zusätzlichen apparativen Aufwand, zum anderen aber auch in der Schwierigkeit der Einhaltung konstanter Reaktionsbedingungen.

Eine dritte Möglichkeit zur Herstellung bimodaler oder multimodaler Polymerisate besteht in einer Vorvermischung mehrerer Katalysatoren mit verschiedenen Polymerisationseigenschaften. Solche Polymerisationsverfahren unter Einsatz mehrerer Katalysatoren sind z.B. aus EP-A 128 045, EP-A 0 619 325 oder EP-A 0 516 018 bekannt.

Von den Metallocenkatalysatoren, der bekanntesten Gruppe der Single-site-Katalysatoren, werden immer mehr chemische Variationen bekannt. So wurden z.B. auch Metallocenverbindungen mit Substituenten beschrieben, die eine Lewis-Base-Gruppe tragen. Bei den Lewis-Base-Gruppen handelt es sich in erster Linie um Sauerstoffoder Stickstoff-Funktionalitäten. Unverbrückte Metallocenkomplexe oder Metallocenkatalysatoren mit Lewis-Basen-Funktionalitäten werden z.B. in WO 97/27227, US-A 5 563 284 und DE-A 43 03 647 beschrieben. Verbrückte Metallocenkatalysatoren mit Lewis-Base-Substituenten werden in EP-A 0 608 054 beschrieben. Allen diesen Beschreibungen ist jedoch gemein, daß, soweit Polymerisationen mit diesen Metallocenkomplexen beschrieben werden, die erhaltenen Polymerisate enge Molekulargewichtsverteilungen aufweisen, wie sie für Single-site-Katalysatoren typisch sind.

Die bekannten Metallocenkomplexe mit Lewis-Basen-Funktionalitäten wurden bisher überwiegend in Niederdruckpolymerisationsverfahren eingesetzt. In WO 96/13529 werden solche donorfunktionalisierten Metallocene beschrieben und ihre Eignung auch für Hochdruckprozesse bis zu 5000 bar erwähnt. Es wird jedoch nichts über mögliche Verbreiterung der Molekulargewichtsverteilung oder über das Auftreten bimodaler Molekulargewichtsverteilungen bei den so hergestellten Polymeren berichtet, noch wurden konkrete Verfahrensbedingungen oder irgendwelche Hinweise für günstige Druck/Temperaturabhängigkeiten gegeben.

Dem erfindungsgemäßen Verfahren lag daher die Aufgabe zugrunde, unter Einsatz nur eines Katalysatorkomplexes und ohne großen apparativen Aufwand Polyolefinpolymerisate zu erhalten, welche gute Verarbeitungseigenschaften und eine breite bzw. bi- oder -multimodale Molekulargewichtsverteilung aufweisen.

Demgemäß wurde ein Verfahren zur Herstellung von Polyolefinen bei Drücken von 500 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Kobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann, gefunden, welches Verfahren dadurch gekennzeichnet ist, daß man die Reaktionstemperatur so einstellt, daß das resultierende Polyolefin eine bi- oder multimodale Molekulargewichtsverteilung oder eine Molekulargewichtsverteilung M_{w}/M_{N}, gemessen durch Gelpermerationchromatographie von ≥5,0 aufweist.

Weiterhin wurde die Verwendung einer solchen metallorganischen Verbindung zur Herstellung von Polyolefinen mit einer durch Gelchromatographie gemessenen bi- oder multimodalen Molekulargewichtsverteilung oder mit einer Molekulargewichtsverteilung M_{W}/M_{N} von ≥5,0 gefunden.

Der vorliegenden Erfindung liegt die Beobachtung zugrunde, daß bei Einsatz spezieller Singel-site-Katalysatorsysteme, nämlich solcher, die eine Lewis-Basen-Funktionalität aufweisen, die in der Lage ist, an das zentrale Metallatom des Komplexes zu koordinieren, bei bestimmten Temperaturen eine Verbreiterung der Molekulargewichtsverteilung oder sogar eine bimodale Molekulargewichtsverteilung auftritt. Unter bimodaler Molekulargewichtsverteilung soll dabei eine Verteilung verstanden werden, die sich in einem Gelpermeationschromatogramm entweder durch das Auftreten zweier Maxima oder zumindest eines Hauptelutionspeaks mit einer Schulter äußert. Mathematisch ausgedrückt hieße dies, daß in der auf- oder absteigenden Flanke des Hauptelutionspeaks zwei zusätzliche Wendepunkte auftreten. Insbesondere unter Hochdruckbedingungen kann durch geeignete Temperaturführung die Molekulargewichtsverteilung in gewünschter Weise beeinflusst werden, so daß mit vielen dieser Katalysatorsysteme auch bimodale Polymerisate erhalten werden können.

Das erfindungsgemäße Verfahren ist prinzipiell zur Herstellung ganz verschiedener Polyolefine geeignet. So lassen sich erfindungsgemäß z.B. Ethylen, Propylen oder höhere α-Olefine allein oder auch in Mischung dieser Monomere polymerisieren bzw. copolymerisieren, wobei das Verfahren besonders zur Herstellung von Ethylenhomo- und Copolymerisaten geeignet ist. Insbesondere bei Katalysatorsystemen, die auf metallorganischen Verbindungen der Gruppe VIIIa des Periodensystems beruhen, lassen sich auch vorteilhaft polare Comonomere wie Acrylsäure- oder Methacrylsäureester oder diese Säuren selbst mit Ethylen oder α-Olefinen copolymerisieren. Auch zur Herstellung vinylaromatischer Polymerisate ist das Verfahren geeignet.

Das erfindungsgemäße Verfahren kann in einem Druckbereich von 500 bis 4.000 bar durchgeführt werden. Dabei läßt sich das Verfahren in den üblichen dem Fachmann bekannten Hochdruckpolymerisationsverfahren z.B. im gerührten Autoklaven oder in Rohrreaktoren durchführen, wobei dabei insbesondere Drücke von 1.000 bis 3.000 bar und Temperaturen von 160°C bis 350°C, insbesondere von 200°C bis 270°C angewendet werden.

Die Reaktionstemperatur des erfindungsgemäßen Verfahrens hängt einerseits von der eingesetzten katalytisch aktiven metallorganischen Verbindung und andererseits von der gewünschten Molekulargewichtsverteilung des Polymerisats ab. Werden als katalytisch aktive Komplexe beispielsweise verbrückte Zirkonocene eingesetzt, so beobachtet man häufig bei Temperaturen oberhalb von 200°C eine ausgeprägt bimodale Molekulargewichtsverteilung mit zwei Maxima im Gelpermeationschromatogramm. Unterhalb von 200°C zeigt sich dann oft eine Verschiebung zu höherem Molekulargewicht, wobei der niedermolekulare Peak nur noch als Schulter zu erkennen ist. Bei weiterem Absenken der Temperatur verschwindet häufig der niedermolekulare Anteil fast vollständig. Die geeignete Polymerisationstemperatur ist also durch wenige Vorversuche leicht zu ermitteln.

Das erfindungsgemäße Verfahren wird vorzugsweise bei einer Reaktionstemperatur durchgeführt, die in einer bi- oder multimodalen Molekulargewichtsverteilung resultiert.

Ein wichtiges Merkmal des erfindungsgemäßen Verfahrens besteht darin, daß die metallorganischen Verbindungen, die Bestandteil des Katalysatorsystems sind, eine Lewis-Basen-Funktionalität aufweisen, die so angeordnet ist, daß sie intramolekular an das zentrale Metallatom der metallorganischen Verbindung koordinieren kann. Dieses Merkmal kann durch eine Vielzahl möglicher chemischer Strukturen und Anordnungen sowie durch eine Vielzahl von Substitutionsmustern erreicht werden. Kritisch ist daher weniger die Art der Substitution oder die chemische Natur der Lewis-Base-Liganden als vielmehr die Möglichkeit der genannten Koordinationsfähigkeit. Bei der Auswahl geeigneter metallorganischer Verbindungen kann z.B. auf einfache Weise mit Hilfe von Molekülmodellen überprüft werden, ob ein bestimmter Katalysatorkomplex das Erfordernis, daß nämlich die Lewis-Basen-Funktionalität an das Metallatom koordinieren kann, erfüllt ist.

Die in dem erfindungsgemäßen Verfahren eingesetzten Katalysatorsysteme können als katalytisch aktive Verbindung verschiedene metallorganische Verbindungen enthalten. Eine bevorzugte Ausführungsform des Verfahrens ist dadurch gekennzeichnet, daß man als metallorganische Verbindung einen Metallocenkomplex der allgemeinen Formel I einsetzt 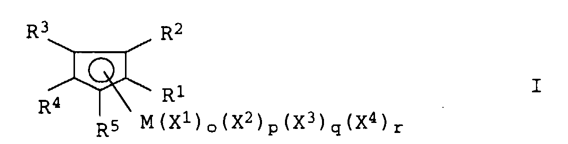 in der die Substituenten und Indices folgende Bedeutung haben:
- M: Titan, Zirkonium, Hafnium oder Vanadium,
- R¹ bis R⁵: Wasserstoff, C₁- bis C₁₀-Alkyl, 5- bis 7-gliedriges Cycloalkyl, das seinerseits ein C₁- bis C₁₀-Aryl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, eine Gruppe mit Lewis-Basen-Funktionalität oder gemeinsam mit einem Rest X¹ bis X⁴ ein Brückenglied zum Metallatom M,
- R⁶: C₁- bis C₁₀-Alkyl, C₆- bis C₁₅-Aryl oder C₃- bis C₁₀-Cycloalkyl,
- X¹ bis X⁴: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹²-, -NR¹²R¹³ oder 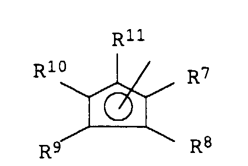 mit
- R¹² und R¹³: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- R⁷ bis R¹¹: Wasserstoff, C₁- bis C₁₀-Alkyl, 5 bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹⁴)₃, eine Gruppe mit Lewis-Basen-Funktionalität oder gemeinsam mit einem Rest R¹ bis R⁵ ein Brückenglied zwischen den Cyclopentadienylsystemen,
mit
- R¹⁴: C₁- bis C₁₀-Alkyl, C₆- bis C₁₅-Aryl oder C₃- bis C₁₀-Cycloalkyl,
und
- o, p, q, r: ganze Zahlen im Bereich 0 bis 4, wobei die Summe o+p+q+r+1 der Wertigkeit von M entspricht,
mit der Bedingung, daß entweder mindestens einer der Reste R¹ bis R⁵ oder R⁷ bis R¹¹ eine Gruppe mit Lewis-Basen-Funktionalität bedeutet oder das Brückenglied zwischen den Cyclopentadienylsystemen oder zwischen einem Cyclopentadienylsystem und dem Metallatom M eine solche Gruppe mit Lewis-Basen-Funktionalität trägt.

Bevorzugte Metalle M sind Titan und Zirkonium, insbesondere Zirkonium.

Als Substituenten R¹ bis R⁵ kommen neben Wasserstoff, insbesondere C₁- bis C₆-Alkylgruppen, ganz besonders Methyl, Ethyl, Propyl, n-Butyl, iso-Butyl und tert.-Butyl in Betracht. Dabei kann der Cyclopentadienylkern einfach oder mehrfach, vorzugsweise einfach oder zweifach mit solchen Alkylgruppen substituiert sein. Neben diesen alkylsubstituierten Cyclopentadienylresten sind insbesondere Cyclopentadienylsysteme geeignet, bei denen zwei benachbarte Reste R¹ bis R⁵ zu cyclischen Gruppen verbunden sind, die ihrerseits wiederum Substituenten tragen können. Zu nennen sind beispielsweise substituierte und unsubstituierte Indenyl-, Tetrahydroindenyl-, Benzindenyl- und Fluorenylreste. Neben den genannten Substituenten kann zusätzlich noch ein Substituent mit einer Lewis-Basen-Gruppe vorhanden sein.

Von den Liganden X¹ bis X⁴ ist in der Regel ein Rest ebenfalls ein Cyclopentadienylsystem, so daß also ein Biscyclopentadienylkomplex vorliegt. Weiterhin kann einer der Reste X¹ bis X⁴ jedoch auch ein Brückenglied darstellen, welches mit dem in Formel I abgebildeten Cyclopentadienylkern verbunden ist, so daß ein Monocyclopentadienylkomplex vorliegt. Die weiteren Reste X¹ bis X⁴ sind vorzugsweise Halogen, insbesondere Chlor, oder C₁- bis C₄-Alkyl, wobei Chlor als Ligand insbesondere für Vorstufen des katalytisch aktiven Komplexes besonders vorteilhaft ist.

Für die Reste R⁷ bis R¹¹ sind die gleichen Reste bevorzugt, wie sie für die Reste R¹ bis R⁵ genannt wurden.

Für den Einsatz in dem erfindungsgemäßen Verfahren haben sich besonders solche metallorganischen Verbindungen als vorteilhaft erwiesen, die einen verbrückten Metallocenkomplex aufweisen. Unter verbrückten Metallocenkomplexen sollen dabei solche verstanden werden, die entweder eine Brücke zwischen einem Cyclopentadienylrest und dem zentralen Metallatom aufweisen, oder solche, in denen das Brückenglied zwei Cyclopentadienylreste miteinander verbindet.

Eine besonders vorteilhafte Ausführungsform des erfindungsgemäßen Verfahrens ist dadurch gekennzeichnet, daß der Metallocenkomplex der Formel I ein Brückenglied zwischen zwei Cyclopentadienylsystemen aufweist.

Eine weitere besonders vorteilhafte Ausführungsform besteht in einem Verfahren, welches dadurch gekennzeichnet ist, daß das Brückenglied zwischen zwei Cyclopentadienylsystemen die Struktur der allgemeinen Formel II aufweist 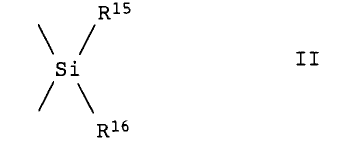 wobei
- R¹⁵ und R¹⁶: einen C₁- bis C₂₀-Hydrocarbylrest mit mindestens einem sauerstoff-, schwefel-, stickstoff- oder phosphorhaltendem Substituenten
bedeutet.

Als Reste R¹⁵ und R¹⁶ kommen dabei chemisch sehr unterschiedliche C₁- bis C₂₀-Hydrocarbylreste in Betracht. Zu nennen sind beispielsweise Alkoxyphenylreste, welche über eine Alkylengruppe mit dem Siliciumatom verbunden sind. Auch Alkylamino- oder Alkoxygruppen, welche über 1 bis 10 C-Atome lange Alkylenreste mit dem Silicium verbunden sind, kommen in Betracht. Weiterhin sind Reste zu nennen, bei denen die Lewis-Basen-Funktionalität in einer Thioether- oder Estergruppe basiert. Zu nennen sind beispielsweise C₁- bis C₄-Alkylester von Carbonsäuregruppen, wobei die Carbonsäure wiederum über einen Alkylenrest an das Siliciumatom gebunden sein kann. Neben den Alkoxyfunktionen kommen auch cyclische Ether wie Tetrahydrofuranylgruppen, welche ebenfalls über einen geeigneten Alkylenrest an das Siliciumatom gebunden sind, in Betracht. Neben den Silylbrücken der allgemeinen Formel II kommen auch analoge Brückenglieder mit Germaniumatomen oder C₁-bis C₃-Alkylengruppen, die in analoger Weisewie das Siliciumatom substituiert sein können, in Betracht.

Eine weitere bevorzugte Ausführungsform des Verfahrens ist dadurch gekennzeichnet, daß mindestens einer der Reste R¹ bis R⁵ oder R⁷ bis R¹¹ einen Rest der allgemeinen Formel IIIa oder IIIb bedeutet

―(CR¹⁷R¹⁸)ₙ―YR¹⁹R²⁰ IIIa

―(CR¹⁷R¹⁸)ₙ―ZR¹⁹ IIIb

in welchen die Variablen die folgende Bedeutung haben:
- R¹⁷ und R¹⁸: Wasserstoff, C₁- bis C₁₀-Alkyl, C₆- bis C₁₅-Aryl oder C₃- bis C₁₀-Cycloalkyl,
- R¹⁹ und R²⁰: C₁- bis C₁₀-Alkyl, C₆- bis C₁₅-Aryl oder C₃- bis C₁₀-Cycloalkyl,
- n: eine ganze Zahl im Bereich von 0 bis 10
- Y: Stickstoff oder Phosphor und
- Z: Sauerstoff oder Schwefel.

Die Reste R¹⁷ und R¹⁸ sind dabei vorzugsweise Wasserstoff oder niedriges Alkyl wie Methyl oder Ethyl, die Reste R¹⁹ und R²⁰ sind vorzugsweise kurze Alkylgruppen wie Methyl, Ethyl, Propyl oder Butyl. n ist vorzugsweise eine Zahl zwischen 2 und 6, insbesondere 2 oder 4. y ist vorzugsweise Stickstoff, z vorzugsweise Sauerstoff.

Als besonders vorteilhaft zum Einsatz in dem erfindungsgemäßen Verfahren haben sich Metallocenkomplexe erwiesen, bei denen eines der Cyclopentadienylsysteme ein substituiertes oder unsubstituiertes Fluorenylsystem ist.

Neben den Metallocenkomplexen können in dem erfindungsgemäßen Verfahren auch andere metallorganische Verbindungen eingesetzt werden. Prinzipiell sind alle dem Fachmann bekannten Single-site-Katalysatoren, wie sie etwa in WO 96/23010 beschrieben werden, geeignet, vorausgesetzt, daß sie in geeigneter Weise mit einem Substituenten mit Lewis-Basen-Funktionalität ausgestattet sind. Eine weitere Ausführungsform des erfindungsgemäßen Verfahrens ist daher dadurch gekennzeichnet, daß man als metallorganische Verbindung eine Verbindung der allgemeinen Formel IV einsetzt 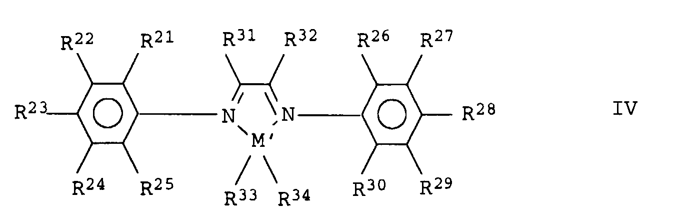 wobei die Variablen die folgende Bedeutung haben:
- R²¹ bis R³²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₂ oder eine Gruppe mit Lewis-Basen-Funktionalität, wobei mindestens ein Rest R²¹ bis R³² eine solche Gruppe mit Lewis-Basen-Funktionalität sein muß,
- R³³ und R³⁴: Halogen, C₁- bis C₁₀-Alkyl, C₆- bis C₁₅-Aryl, C₇- bis C₃₀-Alkylaryl, -OR¹² oder -NR¹²R¹³, und
- M': ein Metall der Gruppe VIIIa des Periodensystems.

Als Reste R²¹ bis R³² kommen neben Wasserstoff insbesondere niedere Alkylgruppen wie Methyl, Ethyl, Propyl oder Butyl in Betracht, wobei die aromatischen Ringsysteme vorzugsweise ein- bis dreifach mit solchen Alkylgruppen substituiert sind. Für die Struktur der Gruppe mit Lewis-Basen-Funktionalität gilt das bereits für die entsprechenden Metallocenkomplexe Gesagte. Vorzugsweise bedeutet mindestens einer der Reste R²¹ bis R³² einen Rest der allgemeinen Formel IIIa oder IIIb.

Erfindungsgemäß ist weiterhin die Verwendung einer metallorganischen Verbindung, wie sie vorhergehend beschrieben wurde, zur Herstellung von Polyolefinen mit einer durch Gelpermeationschromatographie gemessenen bi- oder multimodalen Molekulargewichtverteilung.

Die Herstellung der Katalysatorkomplexe kann nach üblichen dem Fachmann bekannten Methoden erfolgen. Hinweise zur Herstellung von Metallocenkomplexen können beispielsweise aus WO 97/27227 erhalten werden.

Um katalytische Polymerisationsaktivität zu entfalten, müssen die genannten metallorganischen Komplexe in der Regel durch einen Cokatalysator aktiviert werden. Die Methoden zur Aktivierung der Katalysatorkomplexe sind allgemein bekannt und bilden keine Besonderheit dieser Erfindung. So können beispielsweise die Metallocenkomplexe in bekannter Weise mit Alumoxanen, insbesondere mit Methylalumoxan, oder mit ionisierenden Verbindungen, die in der Lage sind, ein Metalloceniumkation in nicht koordinierender Weise zu komplexieren, aktiviert werden.

### Beispiele

Die Ligand- und Komplexsynthesen wurden unter Ausschluß von Luft und Feuchtigkeit durchgeführt. Die verwendeten Apparaturen und Reagenzien waren entsprechend vorbereitet.

Für die GPC-Untersuchungen wurden folgende Bedingungen in Anlehnung an DIN 55672 gewählt: Lösungsmittel: 1,2,4-Trichlorbenzol, Fluß: 1 ml/min, Temperatur: 140°C, Kalibrierung: PE-Standards, Gerät: Waters 150C.

### Beispiel 1

### Herstellung von Bis((5-cyclopentadienyl)(o-methoxymethylbenzothiophenyl)methylsilylzirkoniumdichlorid

### 3-Brombenzothiophen

Zu einer Lösung von 25,3 g (188 mmol) Benzothiophen in 100 ml Chloroform wurden 90 ml einer 2(10-3 molaren Lösung von Brom in Chloroform (188 mmol) getropft. Nach Rühren über Nacht wurde die Reaktionslösung viermal mit wäßriger Natriumthiosulfatlösung und dreimal mit Wasser gewaschen. Die organische Phase wurde über Magnesiumsulfat getrocknet, abfiltriert, und das Lösungsmittel im Vakuum entfernt. Eine Destillation im Öl-Pumpenvakuum lieferte zwischen 110°C-120°C 19,5 g (48 % d.Th.) 3-Brombenzothiophen.
13 C-NMR (75 MHz, CDCl₃):
δ =107,8 (s, C₃-Br); 122,8; 123,1; 123,6; 125,1 (4s, C-Atome C₄, C₅, C₆, C₇); 124,4 (s, C₂-S); 137,6; 138,6 (2 s, quartäre C-Atome C₈, C₉).

### 3-Methoxymethylbenzothiophen

Zu 108 ml (173 mmol) einer 1,6 molaren Lösung Butyllithium in Hexan wurden bei 10°C 200 ml Tetrahydrofuran gegeben. Die Lösung wurde auf -78°C abgekühlt, und 34,84 g (163 mmol) 3-Brombenzothiophen zugetropft. Dabei fiel ein weißer Niederschlag aus. Die Suspension wurde bis auf -40°C erwärmt, und 14 ml (184 mmol) Chlormethylmethylether zugetropft. Nach Erwärmen auf Raumtemperatur wurde über Nacht gerührt. Die entstandene Lösung wurde mit 100 ml Wasser versetzt. Man trennte die Phasen und wusch die wäßrige Phase dreimal mit Diethylether. Die vereinigten organischen Phasen wurden über Magnesiumsulfat getrocknet, abfiltriert und das Lösungsmittel im Vakuum entfernt. Man chromatografierte über Kieselgel mit Pentan/Dichlormethan und erhielt 3-Methoxymethylbenzothiophen als gelbes Öl.
1H-NMR (300 MHZ, CDCl₃):
δ = 3,43 (s, 3H, OCH₃); 4,72 (s, 2H, OCH₂); 7,33-7,43; (m, 3H H₂, H₅, H₆); 7,72-7,88 (m, 3H, H₄, H₇)

### (o-Methoxymethyl)benzothiophenyldichlormethylsilan

Zu 12,6 ml (20,2 mmol) einer 1,6 molaren Lösung von Butyllithium in Hexan mit 20 ml Tetrahydrofuran wurden bei -40°C innerhalb von 15 Minuten 3,6 g (20,2 mmol) 3-Methoxymethylbenzhothiophen in 10 ml Hexan dazugetropft. Man ließ auf 0°C auftauen. Die Reaktionsmischung wurde noch 20 Minuten gerührt und mit 20 ml Hexan und 10 ml Tetrahydrofuran verdünnt.

Die entstandene Lithiumsalzlösung wurde bei -78°C zu 55 ml (467 mmol) Trichlormethylsilan gegeben. Nach Erwärmung auf Raumtemperatur wurde das Lösungsmittel im Vakuum entfernt, der Rückstand in Dichlormethan aufgenommen und über Celite filtriert. Nach Entfernen des Lösungsmittels wurde der Rückstand in 20 ml Hexan/5 ml Dichlormethan aufgenommen. Bei 0°C kristallisierte o-Methoxymethylbenzothiophenyldichlormethylsilan aus.
1H-NMR (300 MHZ, CDCl₃):
δ = 3,53 (s, 3H, OCH₃); 4,86 (s, 2H, OCH₂); 7,39-7,87; (m, 4H H₄, H₅, H₆, H₇); 7,72-7,88 (m, 3H, H₄, H₇)

Bis(cyclopentadienyl)(o-methoxymethylbenzothiophenyl)methylsilan Es wurden 6,25 ml (8,75 mmol) einer 1,4 molaren Lösung Butyllithium in Hexan vorgelegt, und bei 0°C 0,82 ml (10 mmol) frisch destilliertes Cyclopentadien in 10 ml Tetrahydrofuran zugegeben. Man ließ auf Raumtemperatur auftauen und 2 Stunden rühren.

1,27 g (4,36 mmol) o-Methoxymethylbenzothiophenyldichlormethylsilan in Tetrahydrofuran wurden bei -78°C zu dem entstandenen Lithiumsalz gegeben. Man ließ über Nacht auftauen und hydrolisierte mit gesättigter Ammoniumchloridlösung. Die Phasen wurden getrennt, die wäßrige Phase wurde dreimal mit Diethylether ausgeschüttelt, die vereinigten organischen Phasen über Magnesiumsulfat getrocknet, abfiltriert, und das Lösungsmittel im Vakuum entfernt. Der Rückstand wurde mit Pentan/Dichlormethan (1/1) über Kieselgel filtriert. Man erhielt 579 mg (38 % d.Th.) Bis(cyclopentadienyl)(o-methoxymethylbenzothiophenyl)methylsilan.
- Masse: m/z =: 350 (M+·)
335 (M+·-·CH₃)
285 (M+·-·C₅H₅)

### Bis(5-cyclopentadienyl)(o-methoxymethylbenzothiophenyl)methylsilylzirkoniumdichlorid

Zu 554 mg (1,58 mmol) Bis(cyclopentadienyl)(o-methoxymethylbenzothiophenyl)methylsilan in 10 ml Tetrahydrofuran wurden bei -78°C 2,25 ml (3,16 mmol) einer 1,4 molaren Lösung Butyllithium in Hexan gegeben. Man ließ auf 0°C auftauen und rührte 1 Stunde.

596 mg (1,58 mmol) ZrCl₄·2 THF wurden in Tetrahydrofuran gelöst und bei -78°C zu der Lithiumsalzlösung gegeben. Man ließ langsam auf Raumtemperatur auftauen. Das Lösungsmittel wurde im Vakuum entfernt. Der Rückstand wurde in Toluol aufgenommen und über Celite filtriert. Nach Entfernen des Lösungsmittels wurde der Rückstand mit Hexan gewaschen und bei -30°C aus Dichlormethan/Hexan Bis(cyclopentadienyl)(o-methoxymethylbenzothiophenyl)methylsilylzirkoniumdichlorid kristallisiert.
1H-NMR (300 MHZ, CDCl₃):
δ = 0,89 (s, 3H, SiCH₃); 3,21 (s, 3H, OCH₃), 4,78 (s, 2H, OCH₂), 5,97-6,02; 6,85-6,95 (2m, je 4H, C₅H₄), 7,35-7,40; 7,68-7,89 (2m, je 2H, H₄, H₅, H₆, H₇)
- Masse: m/z =: 510 (M+·)
495 (M+·-·CH₃)

### Beispiel 2

### Herstellung von Bis(5-cyclopentadienyl) (3-ethoxypropyl)methylsilylzirkoniumdichlorid

### 3-Ethoxypropylmethyldichlorsilan

Zu einer Suspension aus 5 g (6,6 ml, 58 mmol) Allyslethylether und 20 mg Hexachlorplatinsäure wurden bei 0°C 6 ml (6,7 g, 58 mmol) Dichlromethylsilan getropft. Die Reaktionslösung wurde auf Raumtemperatur erwärmt und 48 Stunden gerührt. Destillation bei 27 mbar und 88°C -100°C lieferte 4,438 g (38 % d.Th.) 3-Ethoxypropylmethyldichlorsilan.
1H-NMR (300 MHZ, CDCl₃):
δ = 0,72 (s, 3H, SiCH₃); 1,08-1,22 (m, 5H, SiCH₂ und CH₃CH₂);

### Bis(cyclopentadienyl)(3-ethoxypropyl)methylsilan

Es wurden 15 ml (24 mmol) einer 1,6 molaren Lösung Butyllithium in Hexan vorgelegt und bei 0°C 2 ml (24 mmol) frisch destilliertes Cyclopentadien in 25 ml Tetrahydrofuran zugegeben. Man ließ auf Raumtemperatur auftauen und 2 Stunden rühren.

Die Lithiumsalzlösung wurde auf -78°C abgekühlt und 2,18 g (10,8 mmol) 3-Ethoxypropyl-methyldichlorsilan in 25 ml Tetrahydrofuran zugegeben. Man ließ auf Raumtemperatur auftauen und über Nacht rühren. Das Lösungsmittel wurde im Vakuum entfernt, der Rückstand in Pentan aufgenommen und über Celite filtriert. Nach Entfernen des Lösungsmittels im Vakuum erhielt man 2,435 g (92 % % d.Th.) Bis (cyclopentadienyl)(3-ethoxypropyl)methylsilan.

### Bis (5-cyclopentadienyl)(3-ethoxypropyl)methylsilylzirkoniumdichlorid

Zu 11,25 ml (18 mmol) einer 1,6 molaren Lösung von Butyllithium in Hexan wurden bei -78°C 2,35 g (9 mmol) Bis(cyclopentadienyl) (3-ethoxypropyl)methylsilan und 20 ml Tetrahydrofuran gegeben. Nach Erwärmen auf Raumtemperatur wurde eine Stunde gerührt.

3,39 g (9 mmol) ZrCl₄·2 THF wurden in Tetrahydrofuran vorgelegt und bei -78°C wurde die Dilithiumsalzlösung zugegeben. Man ließ auf Raumtemperatur auftauen und entfernte das Lösungsmittel im Vakuum. Der Rückstand wurde in Toluol aufgenommen und über Celite filtriert. Das Lösungsmittel wurde im Vakuum entfernt und der Rückstand mit Hexan gewaschen. Kristallisation aus Dichlormethan/Hexan lieferte Bis (5-cyclopentadienyl)(3-ethoxypropyl)methylsilylzirkoniumdichlorid als farblosen Feststoff.
1H-NMR (300 MHZ, CDCl₃):
δ = 0,67 (s, 3H, SiCH₃); 1,08 (t(J=7 Hz), 3H, C-CH₃; 1,23-1,28 (m, 2H, Si-CH₂); 1,82-1,91 (m, 2H, C-CH₂-C); 3,34 (q(J=7 Hz), 2H, H₃C-CH₂-O); 3,43 t(J=6 Hz), 2H, H₂C-CH₂-O, 5,90-5,92 (m, 4H, C₅H₄);

### Beispiel 3

### Herstellung von Bis((5-cyclopentadienyl)-di(2-Methoxy-3-methylbenzyl)silylzirconiumdichlorid

### Bis (2-Methoxy-3-methylbenzyl)dichlorsilan

7,8 g (67 mmol) Tetramethylenthylendiamin und 9,5 ml (67 mmol) 2,6 Dimethylanisol 11 wurden in 200 ml Hexan vorgelegt. Unter Eisbadkühlung wurden 42 ml (67 mmol) einer 1,6 molaren Lösung von Butyllithium in Hexan zugetropft. Nach Erwärmen auf Raumtemperatur wurde die Lösung 6 h gerührt, wobei sich ein weißer Niederschlag bildete.

Bei -40°C wurde die Suspension zu einer Lösung von 15 ml (130 mmol) Siliciumtetrachlorid in 150 ml Hexan gegeben. Nach 1 h wurde auf Raumtemperatur erwärmt und 18 h gerührt. Nach vollständigem Entfernen des Lösungsmittels wurde der Niederschlag mit Hexan und Dichlormethan gewaschen und filtriert. Destillation im Hochvakuum lieferte bei 1·10⁻³ mbar und 140°C das monosubstituierte Silan. Bis(2-Methoxy-3-methylbenzyl)dichlorsilan destillierte bei 6·10⁻⁴ bar und 210°C als zähes hellgelbes Öl. Man erhielt 7.1 g (19,2 mmol; 29 d.Th.) in Form zweier Isomere.
FIMS m/e = 368 (M+·)
1H-NMR (300 MHZ, CD₂Cl₂):
δ = 7,00-6,80 (m, 3H, Ar), 3,64/3,58 (s, 3H, OCH₃), 2,68/2,35 (s, 2H, ArCH₂Si), 2,25/2,24 (s, 3H, ArCH₃)

### Bis((cyclopentadienyl)-di(2-Methoxy-3-methylbenzyl)silan

2,9 ml (35 mmol) Cyclopentadien wurden in 40 ml Tetrahydrofuran vorgelegt. Unter Eisabkühlung wurden 21,9 einer 1,6 molaren Lösung von Butyllithium in Hexan zugetropft. Die entstandene Suspension wurde unter Eisbadkühlung mit 4,1 g (11 mmol) Bis(2-Methoxy-3-methylbenzyl)dichlorsilan in 100 ml Tetrahydrofuran umgesetzt. Es entstand eine gelbe Lösung, die zu einem orangenem Öl eingeengt wurde. Es wurde mit gesättigter Ammoniumchloridlösung hydrolisiert. Nach Extraktion mit Diethylether und Entfernen des Lösungsmittels wurden 4,3 g (10 mmol; 90% d.Th.) Bis(cyclopentadienyl)-di(2-Methoxy-3-methylbenzyl)silan erhalten.
1H-NMR (300 MHZ, CD₂Cl₃):
δ = 6,97-6,83 (m, 3H, Ar), 6,81-6,60, 6,23-6,14 (m, Cp), 3,63-3,62, 3,58-3,56 (m, 5H, ArCH₂Si, OCH₃), 2,29-2,21 (m, 3H, ArCH₃)

### Bis((5-cyclopentadienyl)-di(2-Methoxy-3-methylbenzyl)silylzirconiumdichlorid

Zu 1,28 g Kaliumhydrid (32 mmol) in 10 ml Tetrahydrofuran wurden bei -40°C 4,3 g (10 mmol) Bis(cyclopentadienyl)-di(2-Methoxy-3-methylbenzyl)silan in 20 ml Tetrahydrofuran getropft. Nach Erwärmen auf Raumtemperatur wurde 2 h gerührt und anschließend von unumgestzten Kaliumhydrid abgetrennt.

Zu einer Lösung von 4,5 g ZrCl₄·2 THF (12 mmol) in 15 ml Tetrahydrofuran wurde bei -78°C die Lösung des Dianions getropft. Nach Auftauen über Nacht wurde das Lösungsmittel entfertn, der Rückstand mit Dichlromethan behandelt und über Celit filtriert. Im Filtrat waren 4,3 g Rohprodukt enthalten. Es wurde zunächst mit 10 ml Hexan gewaschen und anschließend im Soxleth mehrfach mit heißem Pentan extrahiert. Die Extrakte wurden vereinigt und das Lösungsmittel entfernt. Es wurden 1,4 g (2,38 mmol; 24 % d.Th.) Bis(cyclopentadienyl)-di(2-Methoxy-3-methylbenzyl)silylzirconiumdichlorid als weißes Pulver erhalten.
1H-NMR (300 MHZ, CD₂Cl₃):
δ = 7,02-6,90 (m, 3H, Ar), 6,86 (t, 2H, J=2,4 Hz, Cp), 5,81 (t, 2H, J=2,4 Hz, Cp, 3,68 (s, 3H, OCH₃), 2,76 (s, 2H, ArCH₂Si), 2,87 (s, 3H, ArCH₃)

### Beispiel 4

### Ethylenhomopolymerisation mit Bis (η⁵-cyclopentadienyl(o-methoxymethylbenzothiophenyl)-methylsilylzirkoniumdichlorid

2·10⁻⁶ des Katalysators gemäß Beispiel 1 wurden in 1 ml Toluol gelöst und mit 22,2 ml einer 30 Gew.-% toluolischen MAO-Lösung versetzt. Die erhaltene Lösung wurde auf eine 10 ml Hochdruckschraubspindelpumpe aufgezogen. Die Katalysatorlösung wurde mit Toluol verdünnt in den Reaktor injiziert.

Ein Volumenstrom von 0,417 ml/s mit einer Zusammensetzung von 90 mol% Ethylen und 10 mol% Toluol wurden unter Druck (1500 bar) kontinuierlich in einen 100 ml Rührkessel-Hochdruckautoklaven gefördert. Die Katalysatorlösung (3·10⁻³ ml/s) wurde dem Toluolstrom zudosiert und die Reaktionstemperatur konstant gehalten (s. Tabelle I). Nach Erreichen eines stationären Zustands (nach ca. 5-6 Verweilzeiten) wurden dem Reaktor Proben entnommen die zur Analyse dienen.

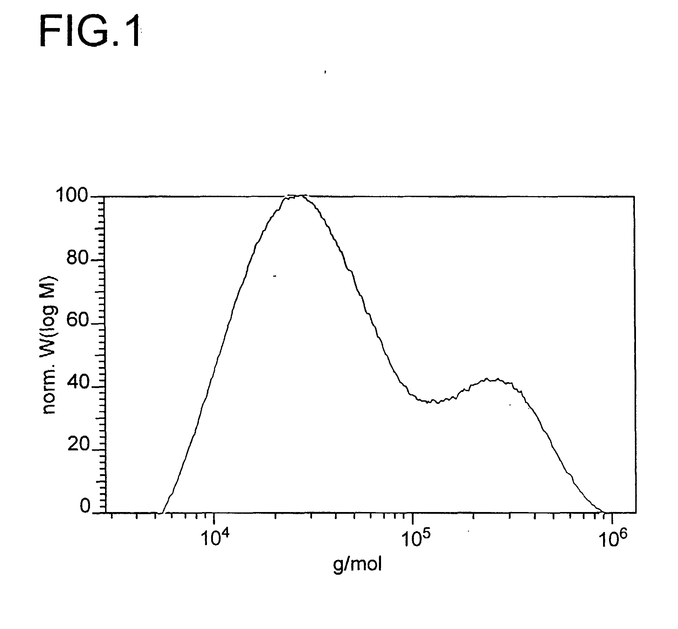

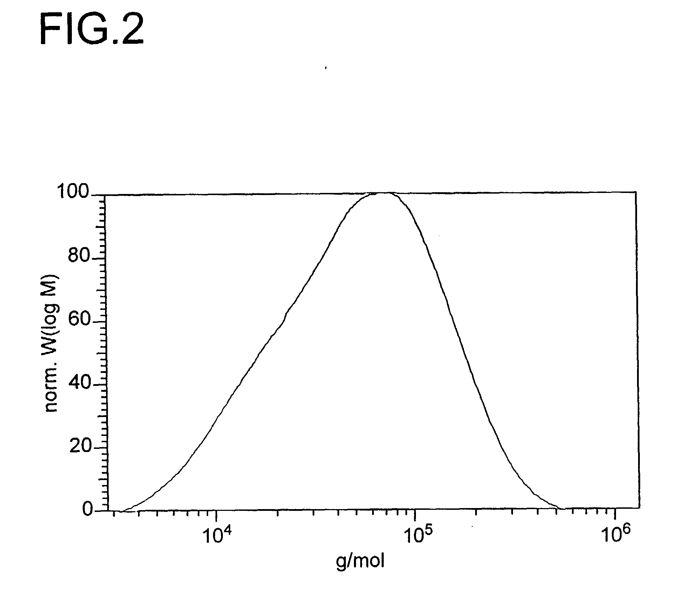

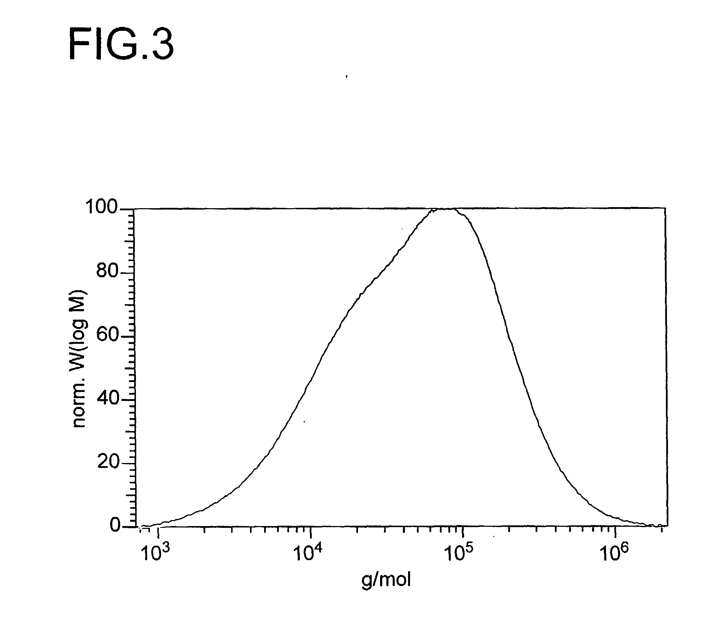

Die Ergebnisse der Polymerisationsversuche sind in Tabelle I zusammengefaßt. Die Molekulargewichtsverteilung gemäß Gelpermeationschromatogramm zeigen die Abb. 1 bis 3.

### Beispiel 5

### Ethylenpolymerisation mit Bis((5-cyclopentadienyl)-di(2-Methoxy-3-methylbenzyl)silylzirconiumdichlorid

Analog zu Beispiel 4 wurde mit der Beispielverbindung 3 eine Ethylenhomopolymerisation durchgeführt.

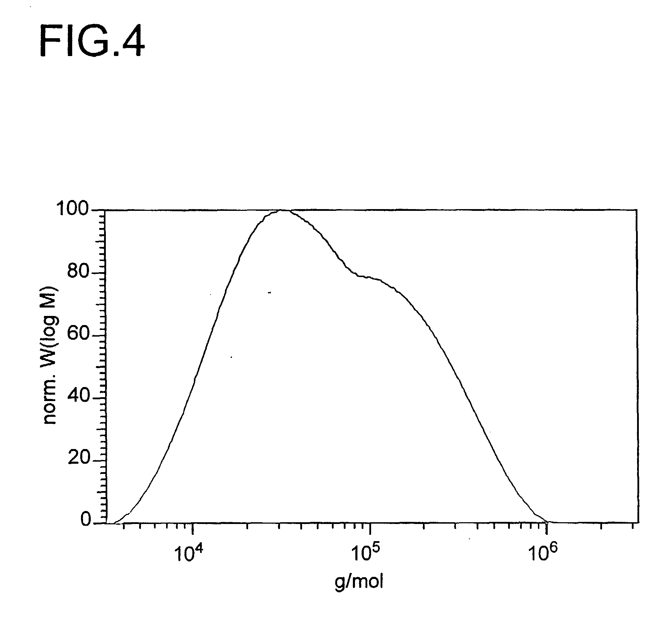

Das Ergebnis zeigt ebenfalls Tabelle I. Das Gelpermeationschromatogramm des Produkts zeigt Abb. 4.

(In den Abbildungen 1 bis 4 ist auf der Abszisse die Molmasse aufgetragen.)

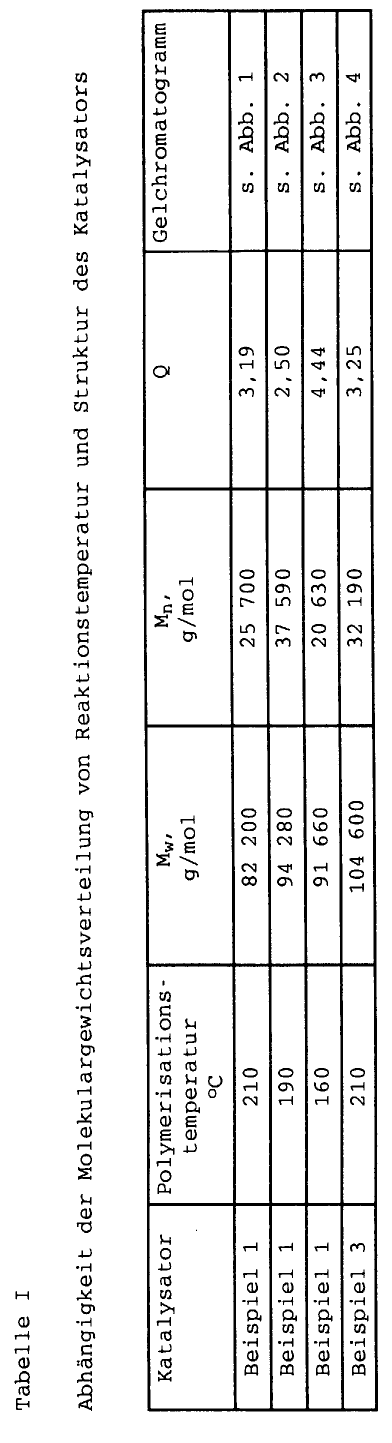

## Patentansprüche

1. Verfahren zur Herstellung von Polyolefinen bei Drücken von 500 bis 4.000 bar und Temperaturen von 20 bis 350°C in Gegenwart eines Katalysatorsystems, welches eine metallorganische Verbindung aus der Gruppe der Metallocene oder der katalytisch aktiven Eisen-, Cobalt-, Nickel- oder Palladiumkomplexe umfaßt, wobei diese metallorganische Verbindung eine Lewis-Basen-Funktionalität aufweist, die so angeordnet ist, daß sie intramolekular an das zentrale Metallatom der metallorganischen Verbindung koordinieren kann, welches Verfahren dadurch gekennzeichnet ist, daß man die Reaktionstemperatur so einstellt, daß das resultierende Polyolefin eine bi- oder multimodale Molekulargewichtsverteilung oder eine Molekulargewichtsverteilung M_{W}/M_{N}, gemessen durch Gelpermeationschromatographie, von ≥5,0 aufweist.

2. Verfahren nach Anspruch 1, dadurch gekennzeichnet, daß man als metallorganische Verbindung einen Metallocenkomplex der allgemeinen Formel I einsetzt 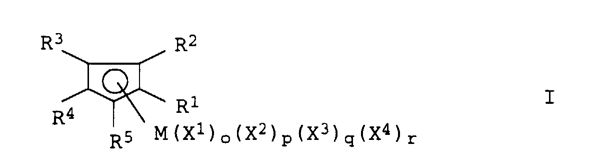 in der die Substituenten und Indices folgende Bedeutung haben:
M Titan, Zirkonium, Hafnium oder Vanadium,
R¹ bis R⁵ Wasserstoff, C₁- bis C₁₀-Alkyl, 5- bis 7-gliedriges Cycloalkyl, das seinerseits ein C₁- bis C₁₀-Aryl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₃, eine Gruppe mit Lewis-Basen-Funktionalität oder gemeinsam mit einem Rest X¹ bis X⁴ ein Brückenglied zum Metallatom M,
R⁶ C₁- bis C₁₀-Alkyl, C₆- bis C₁₅-Aryl oder C₃- bis C₁₀-Cycloalkyl,
X¹ bis X⁴ Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR¹², -NR¹²R¹³ oder 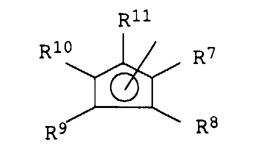 mit
R¹² und R¹³ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
R⁷ bis R¹¹ Wasserstoff, C₁- bis C₁₀-Alkyl, 5 bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹⁴)₃, eine Gruppe mit Lewis-Basen-Funktionalität oder gemeinsam mit einem Rest R¹ bis R⁵ ein Brückenglied zwischen den Cyclopentadienylsystemen,
mit
R¹⁴ C₁- bis C₁₀-Alkyl, C₆- bis C₁₅-Aryl oder C₃- bis C₁₀-Cycloalkyl,
und
o, p, q, r ganze Zahlen im Bereich 0 bis 4, wobei die Summe o+p+q+r+1 der Wertigkeit von M entspricht,
mit der Bedingung, daß entweder mindestens einer der Reste R¹ bis R⁵ oder R⁷ bis R¹¹ eine Gruppe mit Lewis-Basen-Funktionalität bedeutet oder das Brückenglied zwischen den Cyclopentadienylsystemen oder zwischen einem Cyclopentadienylsystem und dem Metallatom M eine solche Gruppe mit Lewis-Basen-Funktionalität trägt.

3. Verfahren nach Anspruch 2, dadurch gekennzeichnet, daß man als metallorganische Verbindung einen verbrückten Metallocenkomplex einsetzt.

4. Verfahren nach Anspruch 2, dadurch gekennzeichnet, daß der Metallocenkomplex der Formel I ein Brückenglied zwischen zwei Cyclopentadienylsystemen aufweist.

5. Verfahren nach Anspruch 4, dadurch gekennzeichnet, daß das Brückenglied zwischen zwei Cyclopentadienylsystemen die Struktur der allgemeinen Formel II aufweist 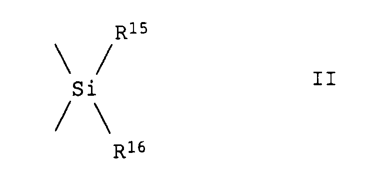 wobei
R¹⁵ und R¹⁶ einen C₁- bis C₂₀-Hydrocarbylrest mit mindestens einem sauerstoff-, schwefel-, stickstoff- oder phosphorhaltendem Substituenten
bedeuten.

6. Verfahren nach den Ansprüchen 1 bis 4, dadurch gekennzeichnet, daß mindestens einer der Reste R¹ bis R⁵ oder R⁷ bis R¹¹ einen Rest der allgemeinen Formel IIIa oder IIIb bedeutet
―(CR¹⁷R¹⁸)ₙ―YR¹⁹R²⁰ IIIa
―(CR¹⁷R¹⁸)ₙ―ZR¹⁹ IIIb
in welchen die Variablen die folgende Bedeutung haben:
R¹⁷ und R¹⁸ Wasserstoff, C₁- bis C₁₀-Alkyl, C₆- bis C₁₅-Aryl oder C₃- bis C₁₀-Cycloalkyl,
R¹⁹ und R²⁰ C₁- bis C₁₀-Alkyl, C₆- bis C₁₅-Aryl oder C₃- bis C₁₀-Cycloalkyl,
n eine ganze Zahl im Bereich von 0 bis 10
Y Stickstoff oder Phosphor und
Z Sauerstoff oder Schwefel.

7. Verfahren nach Anspruch 6, dadurch gekennzeichnet, daß eines der Cyclopentadienylsysteme ein substituiertes oder unsubstituiertes Fluorenylsystem ist.

8. Verfahren nach Anspruch 1, dadurch gekennzeichnet, daß man als metallorganische Verbindung eine Verbindung der allgemeinen Formel IV einsetzt 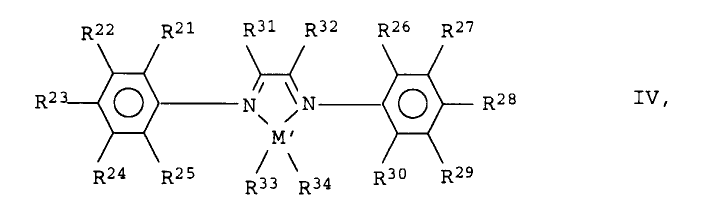 wobei die Variablen die folgende Bedeutung haben:
R²¹ bis R³² Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R⁶)₂ oder eine Gruppe mit Lewis-Basen-Funktionalität, wobei mindestens ein Rest R²¹ bis R³² eine solche Gruppe mit Lewis-Basen-Funktionalität sein muß,
R³³ und R³⁴ Halogen, C₁- bis C₁₀-Alkyl, C₆- bis C₁₅-Aryl, C₇-bis C₃₀-Alkylaryl, -OR¹² oder -NR¹²R¹³, und
M' ein Metall der Gruppe VIIIa des Periodensystems.

9. Verfahren nach Anspruch 8, dadurch gekennzeichnet, daß mindestens einer der Reste R²¹ bis R³² ein Rest der allgemeinen Formel IIIa oder IIIb ist.

10. Verwendung einer metallorganischen Verbindung gemäß den Ansprüchen 1 bis 9 zur Herstellung von Polyolefinen mit einer durch Gelpermeationschromatographie gemessenen bi- oder multimodalen Molekulargewichtsverteilung.
